# EUROPÄISCHE PATENTANMELDUNG

(11) **EP 0 867 802 A1**
(43) Veröffentlichungstag der Anmeldung: **30.09.1998**
(21) Anmeldenummer: 97105170.1
(22) Anmeldetag: 26.03.1997
(51) Int. Cl.: G06F 9/00, G06F 17/60, G06F 9/44, G06F 9/445

(54) **Verfahren zum Konfigurieren einer Vorrichtung**

(71) Anmelder: TELEFONAKTIEBOLAGET LM ERICSSON, 126 25 Stockholm (SE)
(72) Erfinder: Renschler, Martin, 52074 Aachen (DE)
(74) Vertreter: Mohsler, Gabriele

(57) **Zusammenfassung**

Aufgabe der Erfindung ist es ein Verfahren und ein Programmodul zur Konfiguration einer Vorrichtung derart zu schaffen, daß die Konfiguration von untereinander abhängigen Parametern erleichtert und die Änderungen eines Wertes eines Parameters somit erleichtert. Gleichzeitig soll eine Unterstützung zum Auffinden eine optimalen und zulässigen Konfiguration gegeben werden.

Ein Verfahren und ein Prgrammodul ermitteln den Status der Parameter und bei einer gewünschten Änderung des Wertes eines poarameters werden zulässige Werte angezeigt. Einer dieser zulässigen Werte wird ausgewählt und die restlichen Werte der Parameter werden derart berechnet, daß eine optimale unf kunktionierende Konfiguration besteht. Wird eine weitere Änderung vorgenommen, wird dieses Verfahren wiederholt. Weiter Mittel unterstützen die Festlegung des neuen Wertes.

Vorteilhaft ist, daß die neue Konfiguration optimal unterstützt wird und jederzeit die Entwicklung nachvollziehber ist.

## Beschreibung

Die Erfindung betrifft ein Verfahren und ein Programmodul zum Konfigurieren einer Vorrichtung die eine Vielzahl von Paramtern aufweist und bei der die Parameter untereinander abhängige Parameter sind.

Wird eine Vorrichtung neu konfiguriert bedeutet das, daß verschiedenen Parametern der Vorrichtung neue Werte zugeordnet werden. Dies kann beispielsweise manuell erfolgen. Die verschiedenen Parameter sind häufig untereinander derart verbunden, daß sie voneinander mittels Gleichungen, Vorschriften, Regeln usw. abhängig sind. Das bedeutet, daß ein Parameter in Abhängigkeit eines anderen Parameters nicht beliebig verändert werden kann, da dadurch möglicherweise eine Regel verletzt wird.

Mit steigender Anzahl voneinander abhängiger Parameter erhöht sich auch die Schwierigkeit eine neue Konfiguration zu erstellen.

Demgemäß besteht die Aufgabe der Erfindung darin ein Verfahren und ein Programmodul zur Konfiguration einer Vorrichtung derart zu schaffen, daß die Konfiguration untereinander abhängiger Parameter erleichtert wird und somit eine Änderungen eines Wertes eines Parameters erleichtert, bei gleichzeitiger Unterstützung zum Auffinden eine optimalen und zulässigen Konfiguration.

Dies wird erfindungsgemäß gelöst durch die Lehre des Patentanspruchs 1 und durch die Lehre des Patentanspruchs 5.

Hierbei ist besonders vorteihaft, daß die Werte der Parameter nacheinander in beliebiger, von einen Benutzer bestimmten Reihenfolge verändert werden können, und jederzeit während der Änderung sichtbar ist ob, die Änderung zulässig ist, bei gleichzeitiger Bestimmung einer optimalen Konfiguration.

Ebenfalls vorteilhaft erweist sich hierbei, daß während der Konfiguration durch die Anzeige der zulässigen und der unzulässigen Werte eines Parameters ein Benutzer einen sofortigen Hinweis darüber erhält, und es somit vemieden werden kann nicht funktionierende Konfigurationen zu erstellen.

Eine besonders vorteilhafte Verwendung eines solchen Verfahren ergibt sich für die Konfiguration von Basisstationen und für die Konfiguration von Grafikkarten. Verwendung findet ein solches Verfahren bei demgemäß bei allen Verfahren mit untereinander verbundenen Parametern..

Weitere vorteihaft Ausgestaltungen sind den Unteransprüchen 2 bis 4 und 6 bis 7 zu entnehmen.

Besonders vorteilhaft erweist sich hierbei gemäß Patentanspruch 2, daß zusätzlich eine Anzeige erlaubter Werte für Parameter erfolgt, denen bereits ein Wert fest zugeordnet ist. Dadurch wird das Auffinden einer optimalen Konfiguration oder einer wunschgemäßen Konfiguration erhöht, da durch einen solchen Rückblick nachträglich noch eine bessere Bestimmung der einzelnen, zuvor bereits festgesetzten Parameter erreicht werden kann.

Ebenfalls vorteilhaft erweist sich gemäß Patentanspruch 3, daß auch unzulässige Werte auswählbar sind, wobei gleichzeitig bei Auswahl eines unzulssigen Wertes angegeben wird, welche Änderungen zu erfolgen haben, um die Auswahl zu einer zulassigen Auswahl zu machen. Dies erhöht in vorteilhafter Weise die Flexibilität bei einer neuen Konfiguration.

Gemäß Patentanspruch 4 erweist es sich als vorteilhaft, daß die Reihenfolge der Änderungen der Werte der Parameter ermittelt wird, wodurch auf die Relevanz der einzelnen Pararmeter geschlossen wird, um dadurch Änderungen derart vorzuschlagen, daß die weniger relevanten zuerst geändert werden, wobei davon ausgegangen wird, daß die zuerst festgelegten Parameter die relevantesten sind.

Im folgenden wird die Erfindung anhand von Ausführungsbeispielen und anhand der Figuren näher erläutert. Folgende Figuren zeigen:
- Fig. 1:: Ablaufdiagramm eines erindungsgemäßen Verfahrens zum Konfigurieren,
- Fig. 2:: schematische Darstellung eine Ausführungsbeispiels zur Konfiguration einer Basisstation.

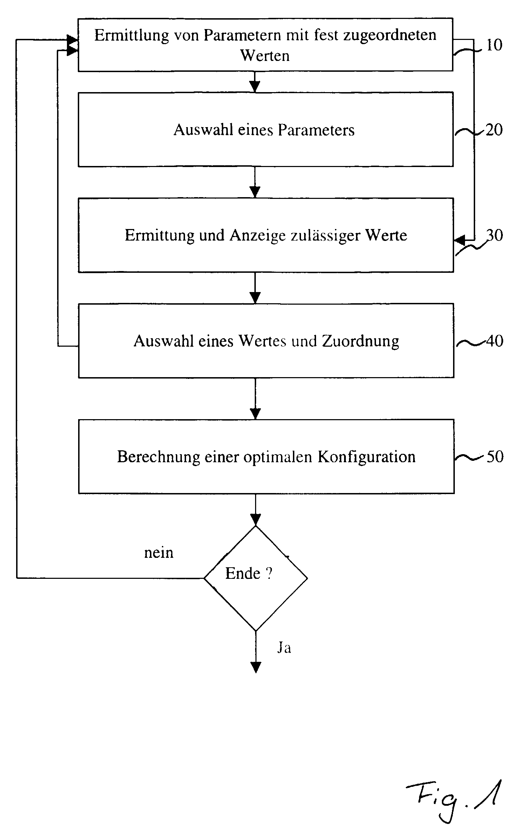

Im folgenden wird anhand von Figur 1 das erfindungsgemäße Verfahren näher erläutert.

Bei einem Verfahren zum Konfigurieren einer Vorrichtung, die eine Vielzahl von Parametern aufweist, sind die verschiedenen Parametern in einem unterschiedlichen Status vorhanden. Hierbei gibt es Parameter, die nicht verändert werden können, also nur gelesen werden können. Weitere Parameter sind entweder in dem Status, daß ihnen ein Wert fest zugeordnet ist, oder aber daß ihnen kein Wert fest zugeordnet ist. Letztere werden im folgenden als frei bezeichnet. Diese Parameter können also sowohl gelesen als auch beschrieben werden.

Um zu einer neuen Konfiguration zu gelangen, werden nun alle diejenigen Parameter betrachtet, die entweder frei sind oder denen ein fester Wert zugeordnet ist. Die verbleibenden Parameter, die nur gelesen werden können, müssen unverändert bleiben und werden für eine neue Konfiguration unverändert übernommen. Die Parameter denen ein fester Wert zugeordnet ist und die Parameter die frei sind, werden für die neue Konfiguration betrachtet. Aus einem freien Parameter kann durch festsetzen eines festen Wertes ein fester Parameter gebildet werden. Ebenso kann ein Parameter mit einem festen Wert wieder zu einem freier Parameter gemacht werden. Dies ist beispielsweise benutzerdefiniert und ist abhängig von einer Eingabe.

So kann beispielsweise vorab jeder feste Wert eines Parameters in den Status 'frei' gesetzt werden oder aber einer gewissen Anzahl von Parametern bleibt der feste Wert zugeordnet. Dieser Status wird in einem ersten Schritt 10 ermittelt. In einem zweiten Schritt 20 wird einer der Parameter zur Änderung ausgewählt. Dies ist vorzugsweise ein solcher, dem kein fester Wert zugeordnet ist. In einem weiteren Schritt 30 wird ermittelt und angezeigt, welches zulässige Werte für den ausgewählten Parameter sind. Dies wird im Zusammenhang mit den Parametern und mit den bereits festgelegten Werten bestimmt. In der weiteren Beschreibung wird dies anhand eines Ausführungsbeispiels noch eingehend erläutert.

In einem nächsten Schritt 40 wird einer der Werte ausgewählt und dem Parameter fest zugeordnet. Vorzugsweise werden zulassige Werte ausgewählt, aber dennoch besteht die Moglichkeit einen unzulässigen Wert auszuwählen und diesen fest zuzuordenen. Hierbei wird aber zusätzlich angezeigt, welche Änderungen an anderen Parametern mit festen Werten vorzunehmen sind, um diese Konfiguration zu einer zulässigen und funktionierenden Konfiguration zu machen.

Als weitere Ausgestaltung kann bei der Anzeige der zulässigen Werte für einen Parameter ebenfalls noch angezeigt werden, welche Änderungen an bereits festgelegten Parametern zulässig sind. Dies kann beispielsweise noch zu einer besseren Konfiguration führen.

Im weitern Verlauf des erfindungsgemäßen Verfahrens wird in einem Schritt 50 für die noch freien Parameter eine optimale Konfiguration berechnet. Für den Fall, daß die Konfiguration optimal erscheint, kann das Verfahren beendet werde. Für den Fall, daß die Konfiguration noch nicht dem Gewünschten entspricht, werden wieder die Parameter ermittelt, denen ein Wert fest zugeordnet ist. Altenativ hierzu kann aber auch bei der Auswahl und Zuordnung eines Wertes gemäß Schritt 40 dies vermerkt und eingetragen werden.

Im folgenden wird anhand eines Ausführungsbeispiels (ohne Figur) aus dem Bereich der Konfiguration einer Grafikkarte die Erfindung näher erläutert.

Hierbei sind drei Parameter zur Ausbildung einer Konfiguration notwendig. Ein Parameter gibt die Auflösung an, ein weiterer Parameter die Wiederholrate und ein dritter Parameter gibt die Anzahl der Farben an. Ausgehend davon, daß eine zulässige und funktionierende Konfiguration die folgende ist: eine Auflösung von 800x600, eine Wiederholrate von 72 Hz und die Anzahl der Farben 256, wird es gewünscht die Auflösung beizubehalten und die Wiederholrate auf 76 Hz zu erhöhen. Wenn der Parameter der Anzahl der Farben noch keinen festgelegten Wert hat, funktioniert eine solche Konfiguration, da dieser Parameter dann in Bezug auf die anderen Parameter mit bereits festgelegten Werten derart berechnet wird, daß eine optimale und somit zulässige Konfiguration entsteht. Demgemäß würde die Anzahl der Farben auf 16 gesetzt werden. Wenn die Anzahl der Farben aber auch auf einen festen Wert, wie z.B. 256 festgelegt ist, wird die Auswahl der Wiederholrate mit 72 Hz als eine unzulässige markiert. Wird dann aber dennoch die Wiederholfrequenz 72 Hz ausgewählt, wird angezeigt, daß zur Erzeugung einer funktionierenden Konfiguration die Anzahl der Farben verändert werden muß. Hierbei werden dann wiederum die Möglichkeiten angezeigt.

Bei der gewünschten Änderung solch einer Konfiguration wird im Allgemeinen davon ausgegangen, daß der am wesentlichsten erscheinende Parameter zuerst eingestellt werden wird. Dies ist beispielsweise die Auflösung von 800x600. Wird nun als nächstes die Wiederholfrequenz festgelegt, z.B. auf 76 Hz und darauf wird gewünscht die Anzahl der Farben auf 256 festzulegen, wird zur Lösung dieser Konfiguartion zuerst die Änderung der Wiederholfrequenz vorgeschlagen, da diese zuletzt geändert worden war und dies erst nach der Festlegung der Auflösung erfolgte. Hierbei wird davon ausgegangen, daß die erste Eingabe die wichtigste ist, weshalb zuerst ein unwichtigerer Parameter zur Änderung vorgeschlagen wird.

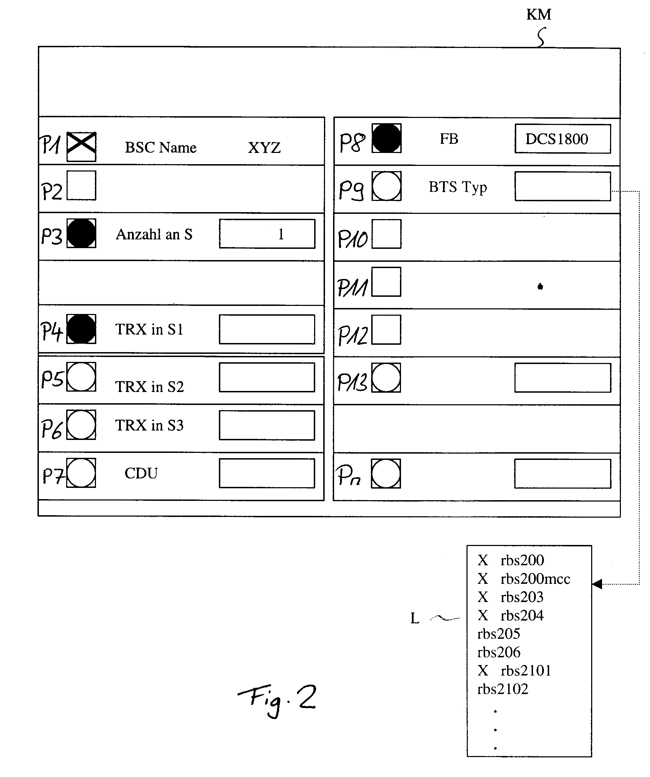

Im folgenden wird ein weiteres Ausführungsbeispiel anhand von Figur 2 erläutert. Hierbei handelt es sich um die Konfiguration einer Basisstation.

Zur Konfiguration einer Basistation wird beispielsweise ein Konfigurationsmenue KM verwendet. Ein solches Konfigurationsmenue KM weist eine Anzahl von Parametern P1,...,Pn auf. Die Parameter sind entweder solche Parameter P1, die nur gelesen werden, was hier durch ein Kreuz gekennzeichnet ist, oder soche denen bereits ein fester Wert zugeordnet ist P3,P4,P8 was durch einen schwarzen Kreis gekennzeichnet is, oder aber solche denen kein Wert fest zugeordnet ist P5,P6,P7,P13,Pn, also die frei sind, was durch einen weißen Kreis gekennzeichnet ist. Zusätzlich sind noch freie Felder verfügbar P10,P11,P12 welche hier zur Wahrung der Übersicht nicht hinzugefügt worden sind.

In dem hier vorliegenden Beispiel gibt der nicht veränderbare Parameter P1 den Namen der Basisstationsteuereinrichtung BSC-Name an. Als weiterer Parameter, denen bereits ein fester Wert zugeordnet ist, gibt der Parameter P8 das ausgewählte Frequenzband FB an. Dies kann beispielsweise DCS 1800, GSM oder jedes bbliebige weitere sein. In dem hier vorliegenden Fall wurde DCS1800 ausgewählt und als Wert festgelegt. Der Parameter P3 gibt die Anzahl an Sektoren S an. Hier wurde die Anzahl auf 1 festgesetzt. Der Parameter P4 gibt die Anzahl an Transceiver TRX in dem ersten Sektor S1 an. Diese wurde hierbei auf den Wert 3 festgelegt. Als Parameter die noch keinen festen Wert haben, ist hier der Parameter P7 angegeben, der eine Steuer-und Anzeigeeinheit CDU angibt. Weitere Parameter P13 und Pn wurden der Übersicht halber nicht genauer spezifiziert.

In dem hier dargestellten Beispiel soll für den Parameter P9, der den Typ der Basissende-/Empfangsstation BTS-Typ angibt, ausgewählt werden. Der Parameter ist noch frei. Soll diesem Parameter nun ein fester Wert zugeordnet werden, wird eine Liste L mit allen möglichen Basissende-/Empfangsstationen BTS-Typ ausgegeben. In der Liste L werden diejenigen Typen deren Wert zu einer unzulässigen Konfiguration führt durch ein X markiert und angezeigt. Alle weiteren zulässigen Werte sind ohne ein X dargestellt und sind somit frei auswählbar. Wird nun ein beliebiger Wert ausgewählt, kann dieser dem Parameter fest zugeordnet werden, was dann durch die Darstellung eines schwarzen Kreises angezeigt wird..

Im folgenden wird das erfindungsgemäße Programmodul zum Konfigurieren einer Vorrichtung näher erläutert (ohne Figur).
Ein erfindungsgemäßes Programmodul weist erste Mitteln zur Bestimmung eines Status der Parameterauf. Der Status eines Parameters gibt an, ob er nur lesbar, frei oder festgesetzt ist.

Als zweite Mitteln weist das Programmodul Mittel zur Bestimmung zulässiger Werte für einen zu ändernden Parameter in Abhängigkeit des Status der weiteren Parametern auf. Demgemäß werden die Parameter denen bereits ein Wert fest zugeordnet ist zur Bestimmung herangezogen, um zulässige Werte zu ermitteln. Die nur lesbaren Parameter werden ebenfallszur Bestimmung herangezogen.

Weitere Mitteln zur Berechnung einer optimalen Konfiguration der Parameter in Abhängigkeit des Status bestimmen die optimale Konfiguration für die freien Parameter, die dann beispielsweise automatisch besetzt werden können.

Das Programmodul weist weiter dritten Mitteln zur Bestimmung zulässiger Werte für Parameter mit bereits fest zugeordneten Werten auf. Dies dient der weiteren Optimierung wobei auch die bereits festgesetzten Parameter noch weiter zur Optimierung beitragen können.

Zusätzliche vierten Mitteln zur Bestimmung von zulässigen Werten für Parameter bei einer Auswahl einer unzulässigen Konfiguration dienen dazu, daß auch ein unzulässiger Wert ausgewählt werden kann, wobei dann aber gleichzeitig ein Vorschlag zur Erstellung einer zulässigen Konfiguration ermittelt und angezeigt wird.

## Patentansprüche

1. Verfahren zum Konfigurieren einer Vorrichtung mit einer Vielzahl von Parametern,
- bei dem ein Parameter zur Änderung ausgewählt wird,
- bei dem zulässige Werte zur Änderung des Parameters in Abhängigkeit von Parametern mit fest zugeordneten Werten ermittelt und angezeigt werden,
- bei dem für den Parameter ein Wert ausgewählt wird und diesem fest zugeordnet wird,
- bei dem weitere Parameter, denen kein Wert fest zugeordnet ist derart berechnet werden, daß eine optimale Konfiguration entsteht.

2. Verfahren nach Anspruch 1, bei dem zusätzlich angezeigt wird, welche weiteren zulässigen Werte für Parameter mit fest zugeordneten Werten bestehen.

3. Verfahren nach Anspruch 1 oder 2, bei dem für den Parameter sowohl zulässige als auch unzulässige Werte auswählbar sind, wobei bei der Auswahl eines unzulässigen Wertes angezeigt wird, welche notwendige Änderung erfolgen muß zur Ausbildung einer zulässigen Konfiguration.

4. Verfahren nach Anspruch 3, bei dem die Reihenfolge der Änderung der Parameter ermittelt wird und bei dem bei der Auswahl des unzulässigen Wertes die notwendige Änderungen in der Reihenfolge angezeigt werden, daß die zuletzt erfolgten Änderungen zuerst geändert werden.

5. Programmmodul zum Konfigurieren einer Vorrichtung mit einer Vielzahl von Parametern,
- mit ersten Mitteln zur Bestimmung eines Status der Parameter,
- mit zweiten Mitteln zur Bestimmung zulässiger Werte für einen zu ändernden Parameter in Abhängigkeit des Status von weiteren Parametern,
- mit weiteren Mitteln zur Berechnung einer optimalen Konfiguration der Parameter in Abhängigkeit des Status.

6. Programmodul nach Anspruch 5, mit dritten Mitteln zur Bestimmung zulässiger Werte für Parameter mit bereits fest zugeordneten Werten

7. Programmodul nach Anspruch 5 oder 6, mit vierten Mitteln zur Bestimmung von zulässigen Werten für Parameter bei einer Auswahl einer unzulässigen Konfiguration.

8. Verwendung des Verfahrens nach Anspruch 1 zur Konfiguration einer Basisstation.

9. Verwendung des Verfahrens nach Anspruch 1 zur Konfiguration einer Grafikkarte.
